# EUROPEAN PATENT APPLICATION

(11) **EP 2 083 059 A1**
(43) Date of publication of application: **29.07.2009**
(21) Application number: 07150473.2
(22) Date of filing: 28.12.2007
(51) Int. Cl.: C09K 8/467, C09K 8/487, C04B 14/38, C04B 16/06

(54) **Cement compositions containing inorganic and organic fibres**

(71) Applicant: Services Pétroliers Schlumberger, 75007 Paris (FR); SCHLUMBERGER HOLDINGS LIMITED, Tortola (VG); Schlumberger Technology B.V., 2514 JG The Hague (NL); PRAD Research and Development N.V., Willemstad, Curacao (AN)
(72) Inventor: Ghassemzadeh, Jaleh, 75015, Paris (FR); Zamora, Dominique c/o Schlumberger Riboud Product Centre, 92142, Clamart (FR); Caritey, Jean-Philippe c/o Schlumberger Riboud Product Centre, 92142 Clamart (FR)
(74) Representative: Hyden, Martin Douglas

(57) **Abstract**

A cement composition, comprises a mixture of a blend of materials including cement and/or micro cement, calcium carbonate, organic fibres, and inorganic fibres; and water; wherein the composition forms a cement that is at least partially soluble in acid and/or water. A method of treating a well, comprises pumping the composition into the well, allowing the cement to set, and treating the set cement so that it is partially to completely dissolved. In case of partial dissolution the residue in time is degradable. The inorganic fiber can be used in the traditional cementing in all stages of the well construction to defeat partial losses and improve the set properties of the final set cement.

## Description

### Technical Field

This invention relates to cement compositions containing inorganic and/or organic fibres. In particular, the invention relates to the use of these compositions to control fluid losses in the permeable subterranean formation when drilling for oil and gas or the like. In this invention, the benefits of using inorganic fibers to be used in all stages of cementing is introduced.

### Background Art

The use of drilling fluid, which is pumped through a drill pipe and which returns to the surface through the annulus between the drill string and wellbore, is well-known in the oil industry. Drilling fluid is used to prevent the influx of formation fluids such as water, oil and gas into a wellbore by overbalancing formation pressure. Drilling fluid is also used to lubricate the drilling bit, to transport cuttings to the surface, to maintain hole stability prior to setting the casing, to suspend cuttings and particles in case circulation stops, and to minimize damage, instability and fluid loss to a wellbore.

During operations occurring over the lifetime of a wellbore from drilling to production, such as drilling the wellbore, completion, and workover, fluids may flow into, and are therefore lost to, unconsolidated or permeable subterranean formations. Such loss can occur when a well is drilled through unconsolidated or permeable formations.

Depending on severity, this loss of drilling fluid may lead to the loss of circulation ('circulation loss') and should circulation loss be severe, holes and openings into the unconsolidated or permeable subterranean formations may have to be sealed before drilling can resume. Circulation loss can happen in the reservoir section as well as in other parts of the well. Also during the cementing operation, cement may be lost to the formation which causes problems in reaching the required length of cement sheath around the casing for required isolation and extra treatments may be required. The reservoir section is the most important section of the wellbore because its formation properties, such as its porosity and permeability, are important factors for defining productivity and production of gas or oil from a well. Hence, the restoration of the reservoir section is important.

The treatment of circulation loss is difficult, and consequences of circulation loss range from loss of money and time to complete loss of the oil well. Circulation loss can be remedied by adding to the drilling fluid 'lost circulation materials' (LCMs), which are granular, flake, or fibrous materials with different sizes and which work by physically obscuring the passage of fluid loss. However, this method is not effective in cases of severe circulation loss because LCMs are weak blocking materials.

An alternative method to remedy circulation loss is to place a cement plug in the loss zone, i.e. to use cement to fill the holes and openings in the unconsolidated or permeable subterranean formations. The advantages here are that a given cement plug is strong enough to act as a barrier to stop the influx of water into a wellbore and additionally, the cement creates isolation and protection for the casing from the unconsolidated or permeable subterranean formations. However, during primary cementing, the undesirable loss of cement to the unconsolidated or permeable subterranean formations does occur and therefore, in addition to the prevention and/or reduction of circulation loss, it is also important to prevent and/or reduce the loss of cement during the drilling process.

In workover, loss of the cement to the permeable and unconsolidated formation is not desirable because of the resulting formation damage and the cement column not reaching the desired heights which in turn can causes problems with proper zonal isolation. Addition of particulate materials and fibers can improve the process with a better quality of the final set cement.

It is known in the oil industry that fibres which are either inorganic or polymeric (organic) can be added to cement compositions in order to improve functionality. Instances of basalt fibres, which are made up using the extrusion method from microscopic grains of plagioclase, pyroxene, and olivine, being added to cement systems in various ratios and sizes are discussed in US7,174,961 B2, US 2006/0157244, US 2006/0213664 A1, WO 2006/003389, WO 2006/100506, WO 2006/106301, WO 2007/054670. US 2007/0056730 also teaches the addition of fibres to slurry. An instance of basalt fibres being added to cement systems in combination with glass fibres and non-metallic fibres is discussed in US 2006/0000611. US 2006/0000612 teaches the addition of metallic fibres and fibreglass to slurry made with calcium phosphate cement and calcium aluminate cement.

However, although these fibres add functionality to a cement system and allow it to be placed where losses might otherwise cause problems, they are not removable by either degradation or dissolution. Use of such fibres in cement systems therefore leads to the expenditure of extra resources and effort to deal with these fibres after their use. Removal of these fibres is not easy, and there is a cost to the environment if these fibres are not removed after use.

It is an object of the invention to provide a cement system which has the benefits of the use of fibres yet which avoids at least some of the cost of removing the fibres after use. Inorganic fibre can be used for normal cement job for surface casing, intermediates and production sections of wellbores when we expect to have losses in the cementing process without expecting to remove the final set material. In addition this fiber can improve compressive strength of the final set material and can resolve partial losses to the permeable or unconsolidated formation.

### Disclosure of Invention

A first aspect of the invention provides an acid soluble cement composition containing different categories of fibers that are either completely acid soluble or degradable by hydrolysis over time in presence of water (preferably, the composition is acid soluble, the organic fibre is water degradable or acidizable, and inorganic fiber is acid soluble). A second aspect of the invention comprises a method of making the composition. A third aspect of the invention comprises a method of treating a well with the composition.

In one embodiment the cement system can be any cement system (non-acidizable, dense cement, CRETE system, light weight cement....) used for all the cementing operation application adjusted with required chemicals can be blended with inorganic fibre or poly vinyl alcohol fibres as organic fibres.

In another embodiment, the compositions can be a mixture of hydraulic cements and other solids to prepare an acidizable final set material, or a blend adjusted with required additives and with other solids to improve its functionality for different ranges of density. Both organic and inorganic fibres can be used with acid-soluble cement systems. The acid-soluble set cement composition can be made from a blend of different particle sizes of fine, medium and coarse, or particles with approximately same size.

The coarse particles in the blend can comprise coarse carbonate selected from family of marble, dolomite, calcium carbonate, and magnesium carbonate. Here the preferred carbonate is calcium carbonate with narrow particle size distribution where acid solubility is required, and other granular particles, micro-spheres, polymers and rubbers where acid solubility is not required. The medium size particles can comprise cement and calcium carbonate. Fine particles can include microfine calcium carbonate, microfine cements, micro size polymers, or carbon depending on degree of acid solubility required for the system.

When an acid soluble composition is required, the total percentage of the calcium carbonate composition is preferably from 100 to 200 percent of the cement.

Where the compositions comprise fine, medium and coarse particles, the percentages of the fine, medium, and coarse particles are preferably selected in accordance with the teachings of EP0621247.

Compositions with the above mentioned blends can comprise 100 to 200 percent (by weight of cement 'BWOC') calcium carbonate.

The density of the cement composition may vary from 7.5 to 26 ppg. For acid soluble compositions, the density can be from 14 to 17 ppg.

In another embodiment, the blend contains the medium sized particles of around 40 to 130 microns. The blend consists of 100% to 200% (BWOC) of calcium carbonate.

Other additives such as antifoam agents, fluid loss agents, anti-settling agents, dispersants, accelerators and retarders can be used in order to prepare a stable slurry that can be placed in different types of well, especially in a horizontal section.

Fibres can be used in order to decrease the skin as the result of fluid invasion and to block permeability by blocking the channels by taking advantage of the different particle sizes and fibres and improving the compressive and tensile strength of the final set material.

In at least one embodiment of the invention the fibres are inorganic magma fibres that are either fine or regular alone or in combination. Such fibres result from the extrusion spun process and are inert, non-corrosive and thermally stable at temperatures up to 1800 degrees Celsius. These fibres have high solubility in 15% hydrochloric acid and are relatively environmentally friendly, with an LC-50 of one million. Their use in cement systems is effective in hard-to-plug permeable formations. The density of this fibre is 2.6, which is close to that of cement, and it can be well-integrated in a cement formulation. The average diameter of the magma fibre is 7 to 10 micron with a range of 5 to 15 micron in diameter. The length of the fine magma fibre is typically in a range of 0.1 to 4 mm. The length of the regular magma fibre is typically from 4 to 20 mm with an average length of 10 to 16 mm. The nature of the fibres is such that they migrate to areas of high permeability and avoids areas of low permeability, creating a mesh on the surface and a strong filtrate of the solid material on the surface. The fibres distribute evenly in the structure of the set cement and cause a desirable heterogeneity and an increase in compressive strength of the final set material. They can be directly be added to the mixing fluid.

In another embodiment the fibres are organic fibres. Suitable organic fibres can be selected from polylactic and polyvinyl alcohol fibres. Polylactic acid fibres, of a single or of varying levels of solubility, are used with cement systems. Polylactic acid fibres typically have a relative density of 1.25 at 25 degrees Celsius, and decompose at a temperature of 242 degrees Celsius, making them suitable for use in all zones. They should be added when cement slurry is prepared. A blend of different grades of polylactic acid fibre is preferable. Polyvinyl alcohol fibres have different levels of solubility in water. The ones with high water solubility are preferred at temperatures over 70 degC .The polyvinyl alcohol fibres can be used in only one length or a blend of different lengths of fibres.

The magma fibres, suitable for this cement system, are soluble in 15% hydrochloric acid and do not leave a residue. The polylactic acid fibres degrades in water over a relatively longer period of time, and are dissolved after the acid-soluble cement system has been dissolved. Polyvinyl alcohol fibres are dissolvable in 15% hydrochloric acid.
Mode(s) for Carrying Out the Invention

The composition comprises hydraulic cement and/or its blend with different solids, water, conventional cement additives, and fibres, to obtain a pumpable fluid. The composition can set into a hard and substantially impermeable mass. The additives required for formulation can be antifoam agents, dispersants, a fluid loss additives, antisettling agents, retarders and optionally, accelerator sand a gas migration additives known to the expert in this matter.

The cement system can be any cement system, including systems with microspheres and systems based on the 'CRETE' technology of Schlumberger having particle sizes in discrete bands. The slurry typically contains a cementatious blend soluble in15% hydrochloric acid aqueous solution.

Fibres are added to the cementatious system to help to cure partial to early stages of severe fluid loss into the subterranean permeable formations. The fibres increase the compressive strength of the final set material, and are either hydrolysable or acid soluble.

The inorganic fibres used in this invention can include magma fibres, available commercially from Lost Circulation Specialists Inc., and can be selected from mineral fibres largely composed of CaO and SiO₂ coated with a monomolecular film of specially formulated surfactant to ease the separation of fibres. Two categories of fibre - regular and fine - are commonly available. The concentration of this fibre in the slurry is typically from 0.5 lb/bbl to 10 lbs/bbl depends on the SVF (solid volume fraction) of the slurry. Once set, the composition, containing the magma fibres, can be completely soluble in acid.

A method for mixing magma fibres with slurry is to add the fibres into the mixing fluid before or during the addition of the cement to the batch mixer. These fibres can also be added after the slurry has been prepared. The preferred method is addition of the fibre in the mixing fluid before addition of cement or any blend, either in a batch mixer or through mixing on the fly.

The organic fibres used in this invention comprise polyvinyl alcohol fibers, or polylactic acid fibres that can hydrolyze over a period of time or in the presence of a required amount of water, producing lactic acid and allowing the composition containing such fibres, when set, to be removed. These fibres can be added in an amount of 0.5 to 5 lb/bbl depending on the SVF of the slurry. The polylactic acid fibres should be added after the other ingredients to the composition have been added and the slurry must not be left to mix for a long time. Poly vinyl alcohol fibers can be used in one length between 4 - 6 mm or a blend of 1.5 mm fiber with 4 - 6 mm fibers.

### Experimental Examples and Data

### EXAMPLE 1

To compare cement systems and the effect of fibres a low compressive strength acidizable cement system is selected. The slurry has a density of 15.5 ppg and contains 100% class G cement, 200% calcium carbonate, antifoam 0.02 gps, anti-settling agent 0.59 %BWOC, dispersant 0.24 gps, fluid loss additive 0.55 gps, and expanding cement additive 1.0 %BWOC. The samples are cured at 150 degF and 3000 psi for 28 hours and the results of the crush tests show that the fine and regular magma fibres increase the compressive strength of the set material (see Table 1 which shows results of crush tests for cement with Magma fibres in two different grades of regular and fine. The samples are cured for 28 hours.)

**Table 1**

| Slurry + Fibre | Amount of fibre, lb/bbl | Crush test, psi | |
|---|---|---|---|
| Slurry | 0 | 605 (Ave.) | |
| Magma Fibre, Regular | 1 | 804 | 780 |
| Magma Fibre, Regular | 2 | 815 | 838 |
| Magma Fibre, Fine | 1 | 886 | 904 |
| Magma Fibre, Fine | 2 | 891 | 902 |

### EXAMPLE 2

Basic cement slurries having a density of 16.74 lb/gal are prepared cured at 190 degrees Fahrenheit and 3000 psi for 72 hours. The first sample contains the base cement alone with no fibres; the second contains the base cement with 2 lb/bbl regular magma fibre; the third contains the base cement with 5 lb/bbl regular magma fibre; the fourth contains the base cement with 10 lb/bbl regular magma fibre. Results of crush tests are shown in Table 2.

**Table 2**

| Slurry + Fibre | Amount of fibre, lb/bbl | Crush test, psi |
|---|---|---|
| Slurry | 0 | 6288 |
| Magma Fibre, Regular | 2 | 9329 |
| Magma Fibre, Regular | 5 | 10220 |
| Magma Fibre, Regular | 10 | 8797 |

### EXAMPLE 3

A 16 ppg slurry containing 100% class H cement, 200% calcium carbonate, expanding cement additive (1% BWOC), anti foam agent (0.4 %BWOC), anti settling agent (1.35 %BWOC), dispersant (1.2 %BWOC), fluid loss additive (0.48 %BWOC). To this slurry, different amounts of magma fibre are added at regular intervals. Fluid loss improves with the addition of fibres. Tests are performed in fluid loss cells and the results show API fluid loss, measured in mL, after 30 minutes of running the experiment. Table 3 shows the results of the fluid loss for slurry with and without Magma fibre.

**Table 3**

| Temperature | API fluid loss, Plain Slurry, mL in 30 min | API Fluid loss, Slurry + 2 lb/bbl, mL in 30 min | API fluid loss, Slurry + 5 lb/bbl, mL in 30 min |
|---|---|---|---|
| Room (Without conditioning) | 57.5 | 44.0 | - |
| 150degF | 74.9 | 63.6 | 71.5 |

### EXAMPLE 4

A cement composition, containing a blend of two particles, that contains 100% Portland cement (33% by weight of blend) and 200% calcium carbonate (67% by weight of blend; average particle sizes are of 65 micron) is prepared. Other chemical additives are added in the formulation in order to prepare slurry with zero free water and API fluid loss of below 120 ml. Magma fibre is added to this formulation in an amount of 3 lb per barrel and 7 lb per barrel. The resulting composition is cured for 24 hours at 150 deg F. A sample is prepared from the cured sample and tested for solubility with 15% HCl showing complete dissolution with no measurable residue.

### EXAMPLES 5 and 6

Cement compositions containing a blend of three different components with coarse, medium and fine particles, that contain 57% by weight of blend coarse calcium carbonate with a particle size of 130 micron, 30% by weight of blend Portland cement, and 13% by weight of blend fine carbonate calcium with a particle size of 10 micron are prepared. Other chemical additives are added in the formulation in order to prepare slurry with zero free water, and API fluid loss of below 50 and 120 ml. Magma fibre is added to this formulation in an amount of 3 lb per barrel and 7 lb per barrel. The resulting composition is cured for 24 hours at 150 deg F. A sample prepared from the cured sample and tested for solubility with 15% HCl shows complete dissolution with no measurable residue.

## Claims

1. A cement composition, comprising a mixture of a blend of materials including cement and/or micro cement, calcium carbonate, organic fibres, and/or inorganic fibres; and water;
wherein the cement composition fibres are acid soluble or degradable by hydrolysis

2. A composition as claimed in claim 1, wherein the calcium carbonate has a particle size of less than or equal to 300 microns.

3. A composition as claimed in claim 1 or 2, wherein the weight ratio of the cement to calcium carbonate is approximately 1:1 to 1:2.

4. A composition as claimed in claim 1, 2 or 3, wherein the cement and calcium carbonate have substantially similar particle sizes.

5. A composition as claimed in any preceding claim, comprising calcium carbonate and/or micro-cement with a particle size of less than 15 microns present in an amount of 10-15% by weight of blend; cement present in an amount of 30-35% by weight of blend and calcium carbonate with a particle size of less than to equal 300 microns present in an amount of 50-60% by weight of blend.

6. A composition as claimed in claim 5, wherein the calcium carbonate and micro cement have particle sizes less than 15 microns.

7. A composition as claimed in any preceding claim, wherein the organic fibres are polylactic acid fibres.

8. A composition as claimed in claim 7, wherein the polylactic acid fibres are released from the structure after acidization hydrolysis in the presence of water.

9. A composition as claimed in claim 7 or 8, wherein the polylactic acid fibres comprise a blend of different grades of fibre.

10. A composition as claimed in claim 7, 8 or 9, wherein the polylactide fibres are of the same or different lengths from 0.5 to 12 mm.

11. A composition as claimed in any of claims 7-10, wherein polylactide fibre is present in an amount of 0.1 to 15 lbs per barrel.

12. A composition as claimed in claim 11, wherein polylactide (PLA) fibre is present in an amount of 0.5 to 5 lbs per barrel.

13. A composition as claimed in claim 12, wherein polylactide (PLA) fibres is present in an amount of 0.5 to 3 lbs per barrel.

14. A compositions as claimed in any preceding claim, wherein the inorganic fibres are in the form of nodules.

15. A composition as claimed in claim 14, wherein fibres in the nodules are coated with a monomolecular film of surfactant.

16. A composition as claimed in claim 14 or 15, wherein the inorganic fibres are mineral oxide fibres.

17. A composition as claimed in claim 16, wherein the mineral oxide fibres are calcium oxide (CaO) and/or silicon dioxide (SiO₂) fibres.

18. A composition as claimed in any preceding claim, further comprising other solids, density control agents and liquid components for modifying the property of the composition or the set cement produced by the composition.

19. A composition as claimed in any preceding claim, wherein magma fibre is present in an amount of 0.1 to 15 lbs per barrel.

20. A composition as claimed in 19, where in magma fiber is present in an amount of 0.5 to 5 lbs per barrel.

21. A composition as claimed in any preceding claim, wherein the organic fibres comprise polyvinyl alcohol fibres.

22. A composition as claimed in claim 22, where in the polyvinyl alcohol fibres are present in one length of between 4 - 6 mm, or as a blend of different lengths of 1.5 mm and 4 - 6 mm lengths.

23. A composition as claimed in claim 21 or 22, wherein polyvinyl alcohol fibre is present in an amount of 0.1 to 7 lbs per barrel.

24. A composition as claimed in claim 23, wherein polyvinyl alcohol fibre is present in an amount of 0.5 to 5 lbs per barrel.

25. A composition as claimed in claim 24, wherein each polyvinyl alcohol fibres is present in an amount of 0.5 to 3 lbs per barrel.

26. A method of treating a well, comprising pumping a composition as claimed in any preceding claim into the well, allowing the cement to set, and treating the set cement so that at least the fibre component is partially or completely dissolved.

27. A method as claimed in claim 26, comprising treating the composition with an acid.

28. A method as claimed in claim 27, wherein the acid comprises hydrochloric acid.

29. A method as claimed in claim 27 or 28, further comprising treating the composition with a solution containing predetermined metallic ions to catalyse dissolution.

30. A method as claimed in any of claims 26-29, comprising placing a plug of the composition in a region of the well suffering from fluid loss.

31. A method as claimed in any of claims 26-30, wherein both magma fibre and polyvinyl alcohol fibre is present, acid dissolution being completed in one step.

32. A method of making a compositions as claimed in any of claims 1 to 25,
wherein inorganic fibres are added to the blend before or after the addition of cement.

33. A method as claimed in claim 32, wherein the fibre is added before blending with cement.

34. A method of making a compositions of as claimed in any of claims 1-25,
wherein organic fibres are the last ingredient to be added to the composition before it is pumped into a wellbore.
